Europäisches Patentamt

European Patent Office

Office européen des brevets

(19)

(11) **EP 0 520 572 B1**

(12) **FASCICULE DE BREVET EUROPEEN**

(45) Date de publication et mention
de la délivrance du brevet:
**12.05.1999 Bulletin 1999/19**

(51) Int Cl.$^6$: **G06F 9/38**

(21) Numéro de dépôt: **92201842.9**

(22) Date de dépôt: **23.06.1992**

(54) **Dispositif de traitement d'informations**

Informationsverarbeitungsvorrichtung

Information processing apparatus

(84) Etats contractants désignés:
**DE FR GB**

(30) Priorité: **28.06.1991 FR 9108064**

(43) Date de publication de la demande:
**30.12.1992 Bulletin 1992/53**

(73) Titulaires:
- **LABORATOIRES D'ELECTRONIQUE PHILIPS
  S.A.S.
  94450 Limeil-Brévannes (FR)**
  Etats contractants désignés:
  **FR**
- **Koninklijke Philips Electronics N.V.
  5621 BA Eindhoven (NL)**
  Etats contractants désignés:
  **DE GB**

(72) Inventeur: **Duranton, Marc, Société Civile S.P.I.D.
F-75008 Paris (FR)**

(74) Mandataire: **Chaffraix, Jean et al
Société Civile S.P.I.D.
156, Boulevard Haussmann
75008 Paris (FR)**

(56) Documents cités:
**EP-A- 0 106 670          EP-A- 0 185 215**

- **THE JOURNAL OF FORTH APPLICATION AND
  RESEARCH vol. 2, no. 1, 1984, pages 49 - 64 J.
  C. VAUGHAN, R. L. SMITH 'The Design of a Forth
  Computer'**
- **SYSTEMS, COMPUTERS, CONTROLS. vol. 13,
  no. 2, 1982, WASHINGTON US pages 11 - 18
  KOICHI WADA, YUKIO KANEDA, SADAO
  MAEKAWA 'System Design and Hardware
  Structure of a FORTH Machine System'**
- **PROCEEDINGS OF THE FALL JOINT
  COMPUTER CONFERENCE vol. 22, Décembre
  1962, SPARTAN BOOKS, WASHINGTON D. C.
  pages 108 - 120 A. C. D. HALEY 'The KDF.9
  Computer System'**
- **PROCEEDINGS OF THE 1988 ROCHESTER
  FORTH CONFERENCE. PROGRAMMING
  ENVIRONMENTS. Juin 1988, ROCHESTER, NY,
  USA pages 140 - 142 K. D. WINTERS 'A
  Mesh-Structured Processor Array Architecture
  Based on a Stack-Oriented Instruction Set.'**

## Description

La présente invention concerne un dispositif de traitement d'informations comportant :

- une mémoire (1) pour contenir des données d'instructions,
- une unité centrale de décodage (35) reliée à la mémoire programme pour décoder les données d'instructions et pour fournir des codes d'opérations et des codes de destination.

De tels dispositifs trouvent d'importantes applications, notamment pour exécuter des instructions d'un language chaîné tel que le FORTH. On pourra consulter à ce sujet la demande de brevet européen No. 0 185 215 ou mieux, la demande de brevet européen No. 0 520 579 déposée simultanément, en France, avec la présente demande. On pourra aussi à ce sujet trouver dans l'article : "The Design of a Forth Computer" de J.C. VAUGHAN et R.L. SMITH paru, pages 49-64, dans THE JOURNAL OF FORTH APPLICATION AND RESEARCH, vol.2, No.1, 1984, la description d'un premier dispositif.

Cependant, pour certaines applications, des exigences imposent que de plus en plus de traitements doivent être exécutés dans des temps de plus en plus courts. Le premier dispositif décrit dans le document ci-dessus ne présente pas une structure qui autorise à satisfaire ces exigences.

Pour satisfaire, dans une large mesure, ces exigences, un tel dispositif est remarquable en ce qu'il comporte, en outre :

- une pluralité d'organes d'opérations reliés en parallèle à l'unité centrale pour exécuter des codes d'opérations,
- au moins une mémoire de type FIFO disposée entre au moins un desdits organes d'opérations et l'unité centrale de décodage pour mettre en file d'attente des codes d'opérations,
- et des moyens, rattachés à l'unité centrale pour faire fonctionner en parrallèle les organes d'opérations en dirigeant les codes d'opérations vers les organes d'opérations en fonction des codes de destination,
- une ligne commune pour relier directement la sortie des organes d'opérations vers l'unité centrale pour exploitation immédiate des résultats.

Il est à noter que le document EP-A 0 106 670 décrit un deuxième dispositif formé d'une pluralité d'organes d'opérations qui, chacun, effectue une partie du répertoire des instructions que le dispositif est capable d'exécuter. Ce deuxième dispositif n'est pas adapté au language de type chaîné et comporte des circuits de sortie rattachés aux organes d'opérations. Les mesures préconisées par l'invention évitent d'utiliser de tels circuits de sortie.

De plus, grâce à l'invention, les problèmes de coordination et d'asynchronisme sont résolus, du moins en grande partie.

Selon un mode de réalisation préféré de l'invention, un dispositif de traitement d'informations est remarquable en ce qu'il comporte au moins une mémoire d'adresse de retour d'appel de procédure de type pile et au moins une mémoire de données intermédiaires de type pile également.

La description suivante, accompagnée des dessins ci-annexés, le tout donné à titre d'exemple non limitatif fera bien comprendre comment l'invention peut être réalisée.

La figure 1 montre un schéma synoptique d'un dispositif conforme à l'invention.

La figure 2 montre le format des instructions.

La figure 3 montre la structure d'une unité centrale de décodage.

La figure 4 montre la structure des organes d'opérations.

La figure 5 montre la structure d'un organe de mémoire.

Les figures 6, 7, 8 représentent un organigramme définissant le fonctionnement de l'unité centrale de fonctionnement.

La figure 9 représente un organigramme définissant le fonctionnement de l'organe d'opérations.

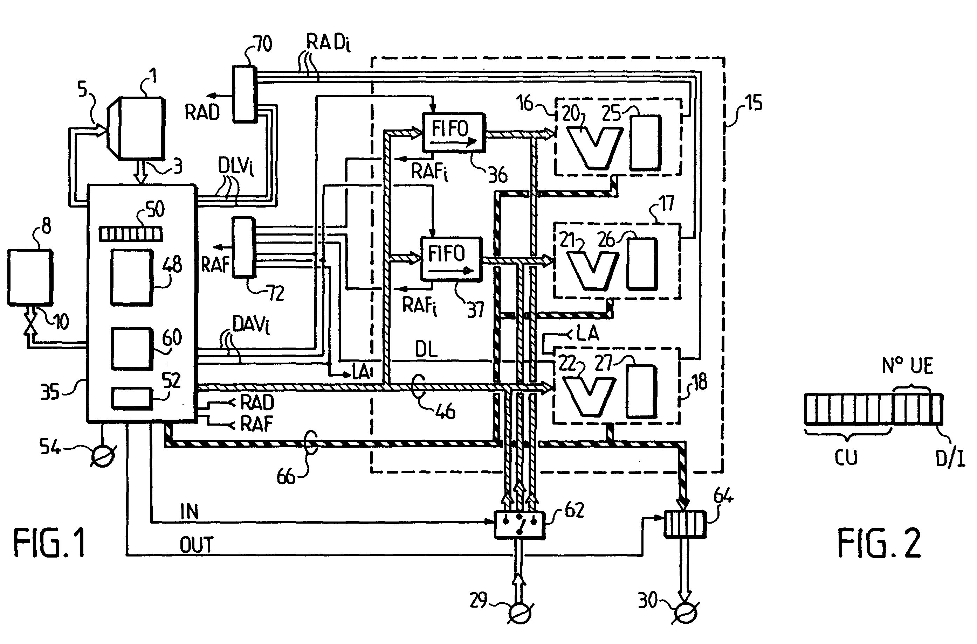

A la figure 1, on a représenté un dispositif de traitement d'informations, plus particulièrement adapté aux programmes rédigés en FORTH. Les informations de programmes formées d'instructions et de paramètres sont emmagasinées dans une mémoire de programme 1. Ces informations apparaissent à la sortie 3 de cette mémoire 1. Le code d'adresse où sont rangées ces informations de programme est appliqué à l'entrée d'adresse 5 de cette mémoire 1.

Une mémoire 8 de type pile "LIFO", appelée par la suite mémoire de retour, est prévue pour contenir des codes d'adresses pour la mémoire 1. Ces codes d'adresse indiquent l'emplacement, dans la mémoire 1, de l'instruction à exécuter après le déroulement d'un sous-programme. Les codes d'adresses de cette mémoire pile 8 sont disponibles sur un accès 10. L'exécution des instructions avec, éventuellement, le traitement de différents paramètres, a lieu dans une unité d'opérations 15 formée de trois organes d'opérations 16, 17 et 18. Ces organes comportent essentiellement d'une part une unité arithmétique et logique ALU 20, 21 et 22 respectivement ayant des possibilités diverses, par exemple la multiplication peut être câblée pour l'une et non pour l'autre. D'autre part, ces unités comportent une mémoire pile 25, 26 et 27 respectivement pour contenir des données diverses, résultats partiels, etc...

Le dispositif de traitement communique avec le monde extérieur au moyen de deux accès 29 et 30, l'accès 29 pour l'entrée des informations et l'accès 30 pour la sortie.

Une unité centrale de décodage 35 détermine les différents parcours des informations entre les mémoires 1 et 8, l'unité d'opérations 15 et les accès 29 et 30.

Conformément à un aspect de l'invention, l'unité d'opérations 15 comporte deux organes de mémoires 36 et 37 formés à partir de mémoires de type FIFO ; ces organes sont branchés entre l'unité 35 et les organes d'opérations 16 et 17 respectivement. L'organe d'opérations 18 est, quant à lui, branché directement sur l'unité 35 ; une ligne commune de données 46 assure la liaison entre les organes 36, 37, l'unité 18 et l'unité centrale de décodage 35.

L'unité centrale de décodage 35 comporte un organe de décodage 48 constitué d'une manière avantageuse, à partir d'une mémoire associative avec son registre d'entrée 49, un registre d'adressage 50 pour adresser la mémoire programme 1 appelée aussi registre programme, une unité de gestion des interruptions 52 qui gèrent les interruptions déclenchées par des signaux appliqués à l'entrée 54 de l'unité 35, et une unité de séquencement 60 qui en gère le fonctionnement. Cette unité 35 comporte d'autres éléments qui seront explicités plus loin dans le présent exposé.

A partir de l'unité centrale 35, les informations provenant de la borne 29 peuvent être dirigées vers l'un des organes 16, 17 ou 18 en agissant sur un commutateur 62. En ce qui concerne les informations à fournir à la borne de sortie 30 elles sont emmagasinées dans un registre tampon 64, dont la commande de chargement provient de l'unité 35. Les entrées de ce registre-tampon sont reliées à une ligne commune de données (ligne BUS) 66. Cette ligne de sortie de données 66 interconnecte l'unité 35 avec toutes les unités 16, 17 à 18.

Les informations transmises sur la ligne 46 sont organisées selon le format représenté à la figure 2. Les différents éléments binaires transportés en parallèle par cette ligne 46 constituent différents champs :

- CU : données ou instructions à exécuter
- N°UE : destination du champ CU, c'est-à-dire le numéro de l'organe d'opérations 16, 17 ou 18 dans l'exemple décrit ; ce champ peut, en variante, comporter autant d'espacement qu'il y a d'organes d'opérations, de sorte que des instructions peuvent être exécutées en parallèle par plusieurs de ceux-ci,
- D/I : ce champ formé d'un élément binaire définit si le champ CU est une instruction pour l'unité d'opération ou une donnée.

Outre ce format, les relations entre les organes 16 à 18 et l'unité centrale 35 sont complétées par différents signaux permettant d'établir un protocole d'échange de données entre les unités 35 et 15.

### 1) Lecture

L'unité 35 demande la lecture d'une donnée contenue dans l'une des mémoires piles 25, 26 ou 27.

La donnée est disponible et prête lorsqu'un signal RAD devient actif. Ce signal est élaboré de la manière suivante à partir des signaux DLVi et RADi.

les signaux RADi (i = 1, 2, 3) :
proviennent respectivement des organes 16, 17 et 18 et signifient que les données issues des mémoires 25 à 27 sont disponibles en lecture pour l'unité 35 sur la ligne 66.
les signaux DLVi :
signifient que l'unité 35 demande la lecture de la mémoire 25, 26 et 27 concernée.

ces signaux DLVi et RADi sont combinés pour fournir le signal RAD élaboré par le circuit logique 70 qui effectue l'opération logique :

$$RAD = (DLV1.RAD1) + (DLV2.RAD2) + (DLV3.RAD3)$$

**2) Ecriture** ou envoi d'une instruction par l'unité 35 dans l'un ou plusieurs des organes 16 à 18, ceci est effectué :

d'une part, au moyen des signaux $DAV_i$ :
fournis par l'unité centrale 35 pour signifier qu'une demande d'écriture est faite (en ce qui concerne l'unité 18, le fil DAV3 est connecté à un fil qui se confond avec un fil LA qui sera explicité plus loin).
et d'autre part, au moyen des signaux $RAF_i$ :

fournis par les organes de mémoire 26, 27 et par l'unité 18 par l'intermédiaire d'un fil DL signifient que les organes 26, 27 et l'unité 18 sont prêtes à recevoir les données.

Les signaux $RAF_i$ et $DAV_i$ sont combinés pour fournir, par l'intermédiaire d'un circuit logique 72 un signal RAF tel que :

$$RAF = (DAV1.RAF1) + (DAV2.RAF2) + (DAV3.RAF3)$$

si il n'est possible de solliciter qu'un seul organe à la fois.

Si par contre plusieurs organes peuvent être sollicités, le signal RAF doit être actif quand tous les organes ont répondu, ce qui permet d'écrire simultanément dans plusieurs organes 16 à 18.

On notera que le signal $RAF_3$ se confond avec le signal DL émanant de l'unité 18 et le signal $DAV_3$ avec un signal LA à appliquer à ce même organe 18. Ces signaux DL et LA seront explicités par la suite.

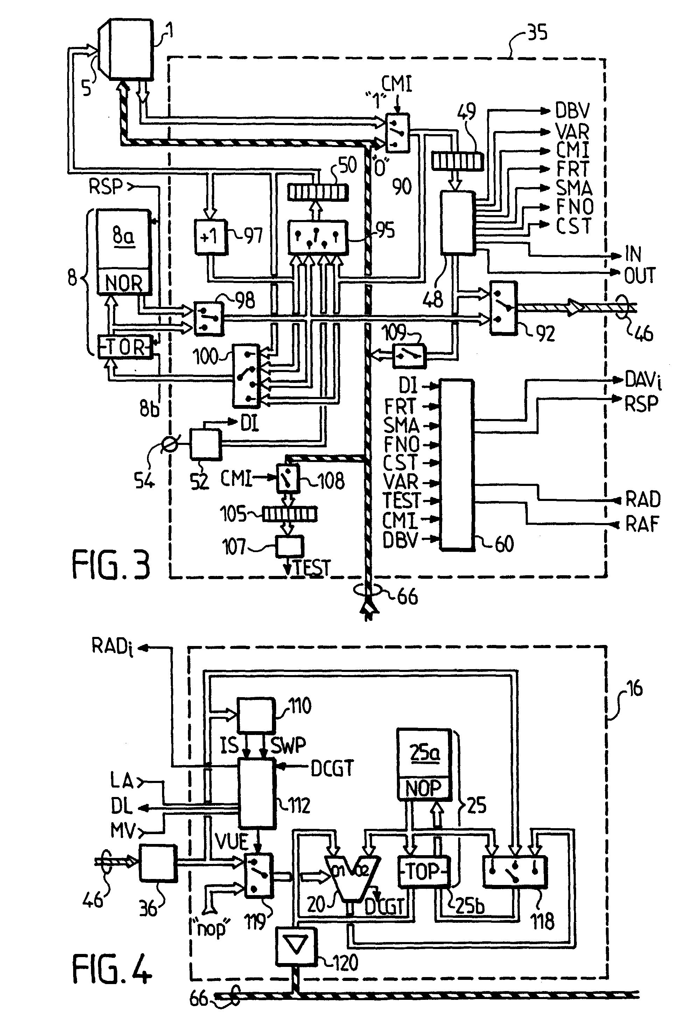

La figure 3 montre en détail l'unité centrale 35.

L'entrée de l'unité de décodage 48 est reliée à la sortie de la mémoire-programme 1 par l'intermédiaire d'un circuit d'aiguillage 90 commandé par un signal CMI. Dans une autre position, ce circuit relie l'entrée de l'unité 48 à la ligne 66. La sortie de cette unité de décodage, en ce qui concerne les instructions et données à transmettre aux différents organes 16 à 18, se fait sur la ligne 46 par l'intermédiaire d'un circuit d'aiguillage 92 à deux positions. D'autres données issues de la mémoire pile 8 peuvent être transmises par la ligne 46, lorsque le circuit 92 est mis dans son autre position. On notera que la mémoire 8 est décomposée en 2 parties :

- une partie 8a contenant toutes les données antérieures y comprise la donnée placée en avant-dernière position NOR sur la pile, et
- une partie 8b contenant la donnée de sommet de pile TOR.

L'unité de décodage 48 fournit les signaux propres à certaines instructions, par exemple :

DBV : demande de communication avec l'une des mémoires 25, 26 ou 27,
CMI : positionne le commutateur 90,
FRT : donne le type d'instruction de retour,
SMA : indique si l'instruction concernée est à exécuter par l'unité centrale de décodage 35 ou non,
FNO : indique une forme normale d'instruction de retour
CST : indique que l'instruction définit une constante
VAR : indique que l'instruction définit une variable.
IN : permet l'introduction de données provenant de l'extérieur (accès 29),
OUT : permet de fournir des données à l'extérieur (accès 30).

Le registre d'adressage 50 peut être chargé de différentes manières, selon les positions d'un circuit d'aiguillage 95. Dans une première position, son contenu est incrémenté d'une unité au moyen d'un incrémenteur 97. Dans une deuxième position, il est chargé par l'information de sortie de la mémoire pile 8 via un commutateur 98. Dans une troisième position, il est chargé à partir d'un circuit 52, par l'adresse du programme d'interruption et, dans une quatrième position par le contenu de la donnée de la mémoire-programme 1 via le commutateur 90.

La partie 8b de la mémoire pile 8 peut être chargée, par l'intermédiaire d'un multiplexeur 100 à quatre positions, de données provenant :

- soit du registre 50, le multiplexeur est mis dans une première position,
- soit de l'incrémenteur 97, le multiplexeur 100 est dans une deuxième position,
- soit du commutateur 98, le multiplexeur étant dans une troisième position,
- soit par les données présentes à la sortie du circuit d'aiguillage 90, le circuit 100 est alors dans une quatrième position.

L'unité de séquencement 60, en fonction des signaux DI, FRT, SMA, FNO, CST, VAR, TEST, CMI, DBV, RAD et RAF, engendre les signaux :

$DAV_i$ : pour sélectionner l'un des organes 16 à 18,
RSP : pour contrôler le pointeur de la pile (mémoire 8) afin de la faire évoluer.

On a prévu aussi un registre 105 couplé à un décodeur 107 pour fournir un signal TEST. Ce registre peut être chargé par des informations provenant de la mémoire associative 48 ou par des informations véhiculées par la ligne 66. Ce registre 105 est connecté à la ligne 66 par un commutateur 108 commandé par le signal CMI.

On notera aussi la présence d'un commutateur 109 à trois états qui permet de connecter la sortie de l'unité de décodage 48 à la ligne 66.

La figure 4 montre plus en détail la structure de l'organe d'opérations 16, la structure des autres organes 17 et 18 pouvant être identique.

Il comporte tout d'abord un organe de décodage 110 qui analyse les données à la sortie de l'organe de mémoire FIFO optionnelle 36. Il fournit deux signaux :

IS : indiquant qu'on a affaire à une instruction,
SWP : indiquant qu'une donnée est adressée à l'organe 16.

Ces informations sont fournies à un organe de commande 112 qui agit, par un signal VUE notamment, sur un circuit d'aiguillage 119 à deux positions. Lorsqu'il est dans une première position, le code opératoire à la sortie de la mémoire 36 est appliqué à l'unité arithmétique et logique 20 ; dans l'autre position, l'unité 20 est inactivée, le code opératoire est alors le code "nop".

La première entrée d'opérande 01 de l'unité 20 est reliée à la sortie d'un registre 25b qui forme le sommet de la mémoire pile 25. La sortie de ce registre est aussi reliée à l'autre partie 25a de la mémoire pile. Le registre 25b est un registre double du genre Maître-Esclave de sorte qu'il est possible d'y emmagasiner une donnée à son entrée tout en lisant la précédente à sa sortie. L'entrée du registre 25b est reliée à la sortie d'un commutateur 118 à trois positions ; dans une première position l'entrée du registre est reliée à la sortie NOP de la mémoire 25 reliée à la deuxième entrée d'opérande 02 de l'unité arithmétique et logique 20 ; dans une deuxième position l'entrée du registre est reliée à la sortie de l'organe 36 et dans une troisième position à la sortie de l'unité 20. Un amplificateur 120 connecte la sortie du registre 116 à la ligne 66.

Le circuit de séquencement 112 fournit aussi le signal $RAD_i$ et les signaux pour la communication avec l'organe de mémoire 36 et la mémoire 25. Il fournit le signal de synchronisation DL en fonction notamment des signaux LA et MV. Il reçoit aussi le signal DCGT issu de l'unité 20. Ce signal signifie que l'unité 20 a terminé son opération et qu'elle est alors disponible.

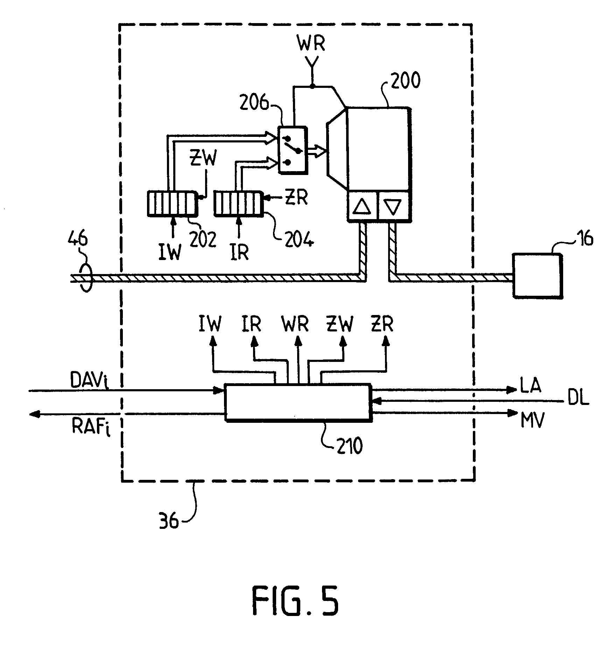

La figure 5 montre un exemple de réalisation de l'organe de mémoire FIFO 36, la structure de l'organe 37 pouvant être considérée comme identique.

L'organe de mémoire 36 est bâti autour d'une mémoire vive 200 à accès aléatoire montée en mémoire pile. Un compteur 202 s'incrémentant sur les signaux IW (écriture) et mis à zéro par un signal ZW est utilisé pour l'écriture de la donnée provenant de la ligne 46 dans la mémoire 200, un compteur 204 s'incrémentant sur des signaux IR (lecture) et mis à zéro par un signal ZR est utilisé pour indiquer l'adresse la lecture. Le choix pour l'adressage de la mémoire 200 entre ces deux compteurs est effectué par un commutateur 206 commandé par le signal d'écriture/lecture WR.

Un circuit de séquencement 210 pilote l'évolution des compteurs 202 et 204 et gère le protocole de communication entre l'unité 16 et l'unité centrale 35 (comme indiqué précédemment avec les signaux DAVi, RAFi, LA, DL, ML).

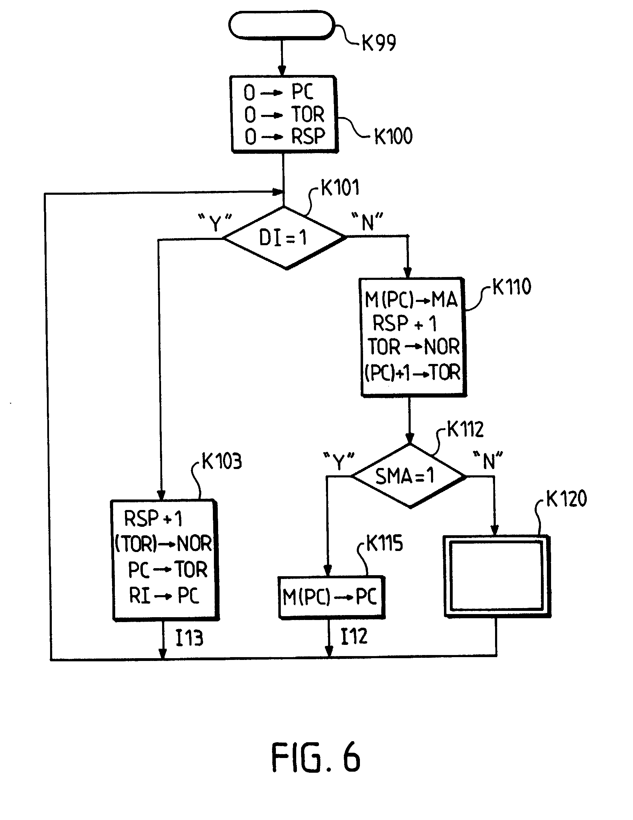

ORGANIGRAMME DE L'ORGANE DE COMMANDE 60 DE L'UNITE 35 (figures 6, 7 et 8) :

La liste des opérations que peut exécuter l'unité 35 est donnée en Annexe I avec la référence des cases de l'organigramme qui vont être décrites.

La case K99 indique la mise à l'état initial du dispositif.

La case K100 indique une séquence d'initialisation qui se déroule à la mise en marche du dispositif.

- Le contenu du registre programme 50, référencé sur les organigrammes par PC, est mis à zéro.
- Le pointeur RSP de la mémoire de retour 8 est aussi initialisé.
- Le sommet de la pile TOR est mis à zéro.

La case K101 indique la scrutation de l'organe de réception d'interruption. Si une interruption est détectée DI = "1" à la sortie de l'organe 52, on passe à la case K103.

La case K103 indique les opérations préalables pour effectuer le programme d'interruption demandé. Tout d'abord le contenu du registre programme 50 est empilé au sommet TOR de la mémoire de retour 8 (d'où les opérations RSP+1 (TOR)→NOR), les multiplexeurs 100 et 95 étant alors positionnés convenablement. Puis on vient lire dans l'organe d'interruption 52 l'adresse [RI] où démarre le programme d'interruption. Cette valeur est alors emmagasinée dans le registre programme 50. La lecture du registre RI provoque la mise à zéro de DI de sorte que lorsqu'à la fin de ces opérations préalables on retourne à la case K101, le test de DI amène à la case K110.

A cette case K110 on indique une série d'opérations.

- L'instruction contenue dans la mémoire-programme 1 est appliquée à la mémoire associative 48, référencée par MA dans les organigrammes, par l'intermédiaire d'un circuit d'aiguillage 90. Ceci est noté par M(PC)→MA
- Le contenu du registre programme 50 est incrémenté d'une unité avant d'être emmagasiné au sommet de la pile TOR de la mémoire de retour 8.

Puis à la case K112 qui suit, la mémoire associative 48 effectue un test sur l'instruction décodée pour savoir si elle concerne l'unité de séquencement 35 ou les organes d'opérations 16 à 18. En d'autres termes, si l'instruction est une instruction à exécuter ou si c'est l'adresse d'un sous-programme ou une instruction concernant le séquencement du programme. Le fonctionnement est le suivant : si la donnée d'entrée de la mémoire associative correspond à une valeur mémorisée dans ladite mémoire associative (lors de l'initialisation), cette dernière la reconnaît et considère qu'il s'agit d'une instruction à exécuter. Si elle n'est pas reconnue, la donnée est considérée comme étant une adresse de sous-programme à exécuter (en ce qui concerne l'utilisation d'une mémoire associative, on pourra se reporter à la demande de brevet français au nom de la demanderesse, précédemment citée). Si c'est un sous-programme SMA = 1 on va à la case K115 où il est indiqué que le contenu de la mémoire-programme pointée par le registre programme est transféré dans ce même registre programme. Puis on revient à la case K101.

Si le test de la case K112 indique qu'une instruction doit être exécutée on passe, par l'intermédiaire d'une branche "N", à la case K120 représentant une série d'opérations montrée aux figures suivantes. Après avoir effectué K120 on revient à la case K101.

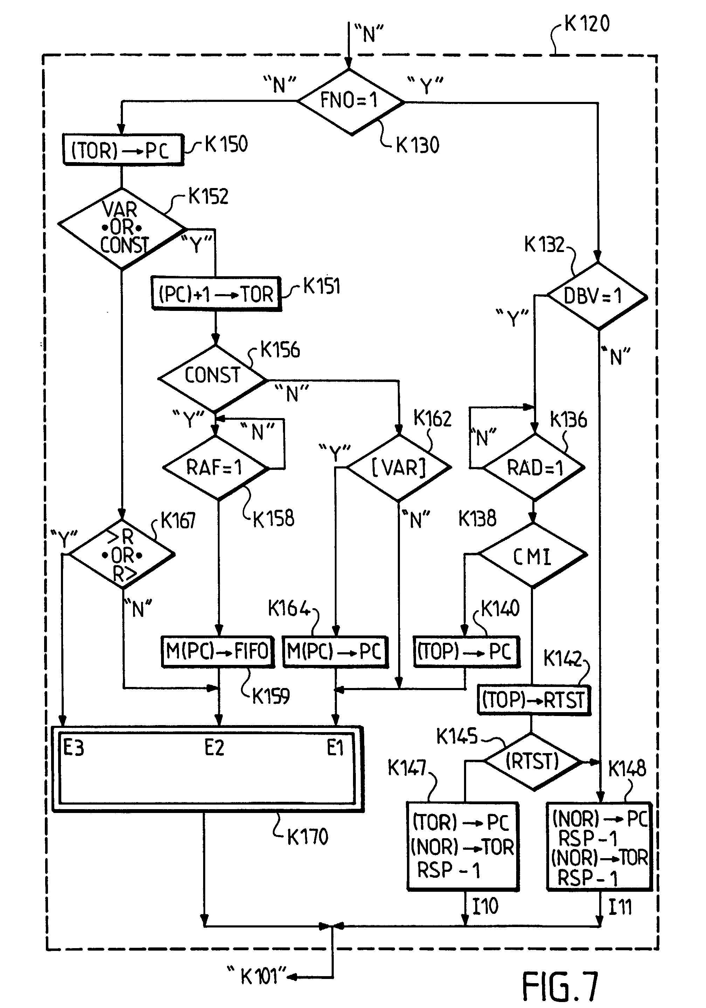

Ainsi la branche "N" indiquée ci-dessus aboutit à la case K130 de la figure 7. Cette case K130 indique un test sur la valeur FNO. Cette valeur indique si on a affaire à un retour de sous-programme FNO = 1 ou pas FNO = 0.

Si c'est un retour de sous-programme, on prend la branche "Y" de la case K130 pour aller à la case K132 où l'on examine si le signal DBV est à "1", signifiant ainsi qu'il y a une demande pour une des mémoires de données 25 à 27. S'il n'y a pas cette demande on passe à la case K148. Le but de ces opérations est de faire un retour de sous-programme. Le compteur de programme PC est chargé avec la seconde valeur de la pile NOR et la pile est donc vidée de 2 éléments.

Si le test indiqué à la case K132 est positif on va à la case K136 où l'on teste la valeur RAD, c'est-à-dire qu'à la demande d'accès à la mémoire (voir case K132) on attend que le signal d'accès RAD indique que cette accessibilité est obtenue. On passe ensuite à la case K138 où l'on examine la valeur du signal CMI. Selon cette valeur le sommet de la pile de paramètre TOP des mémoires 25, 26 ou 27 est transféré :

- soit dans le registre-programme 50 (case K140),
- soit dans le registre 105 (appelé RTST sur l'organigramme) qui est un registre de contrôle de séquencement faisant partie de l'unité 35 (case K142).

Le but de ces opérations est de faire une rupture de séquence de programme suivant une donnée provenant des organes 16 à 18 et contenue en sommet (TOP) de leur pile-mémoire 25 à 27 respectivement.

De la case K142 on va effectuer un test indiqué à la case K145, c'est-à-dire que l'on examine les données contenues dans le registre. Suivant le résultat de ces données on va à la case K147 où le sommet de la pile de retour, situé donc à la position TOR est emmagasiné dans le compteur-programme, ce qui correspond à l'exécution séquentielle de l'instruction suivante, le contenu du registre programme 50 ayant été précédemment incrémenté d'une unité (case K110). L'exécution de ces instructions précédemment décrites permet la sortie des données vers le monde extérieur puisqu'elles circulent sur la ligne BUS 66 connectée à l'accès 30 par l'intermédiaire du registre 64. De la case K145, on peut aller aussi à la case K148 où il est indiqué que le contenu de l'avant dernière position NOR de la mémoire 8 est chargé dans le registre programme 50 correspondant à un retour de sous-programme. Des cases K147 et K148 on va à la case K101 déjà décrite.

On revient maintenant à la case K130 et l'on examine le cas où l'on a affaire à un retour de sous-programme (FNO = 1) ou pas. Si non (pas de retour de sous-programme) on passe à la case K150 où est indiqué un transfert de la donnée contenue au sommet TOR de la mémoire de retour dans le registre-programme 50, ce qui correspond à l'exécution en séquence de l'instruction suivante. Ensuite on va à la case K151 si un test indiqué à la case K152 est positif. Le test de la case K152 détermine si l'on a affaire à une isntruction du type CONST ou VAR selon la nomenclature FORTH. La case K151 représente l'emmagasinage, à la position TOR de la mémoire 8, du contenu du registre-programme 50 augmenté d'une unité (par l'incrémenteur 97). Après le passage de la case K151, on va à la case K156 où l'on fait la séparation entre une constante ou une variable. Si c'est une constante on emprunte la branche "Y". On emprunte alors la ligne BUS 46 connectée aux mémoires de données des organes 16 à 18, on attend que le signal RAF de disponibilité soit actif (case K158). RAF une fois actif, la donnée passe (case K159) sur la ligne 46 et entre dans les organes 16 à 18 par l'intermédiaire ou non des mémoires FIFO 36 ou 37. Lors de son passage dans l'unité 48 la constante est mise au format décrit à la figure 2.

Le test de la case K156 peut être négatif, on emprunte alors la branche "N" pour aller à la case K162. Là, on examine le type de l'instruction concernant une variable (si elle est directe ou indirecte). Si elle est indirecte on emprunte la branche "Y" pour aller à la case K164. Le registre-programme 50 est rechargé de la valeur pointée dans la mémoire-programme par son contenu (case K164), dans ce cas il pointe l'adresse effective de la variable ; si elle est directe on va à la case K170 à l'entrée "E1".

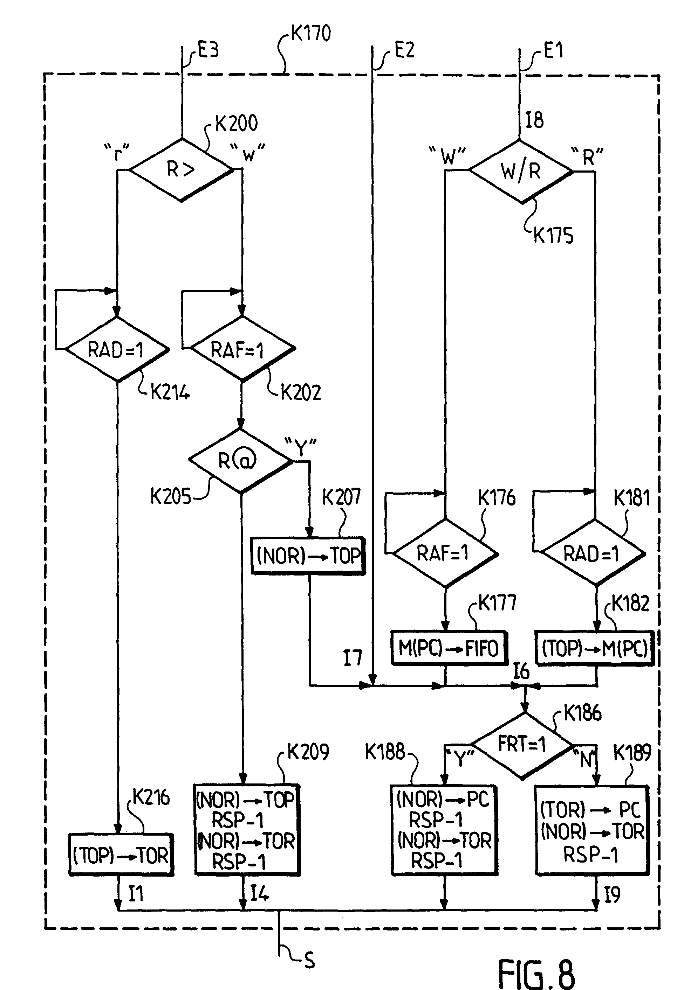

Le test à la case K152 peut être négatif, on effectue alors un test (case K167) pour savoir si l'on a affaire à une instruction de type (>R ou R>) (échange pile de retour avec pile de donnée. Selon le résultat de ce test, on prend les branches "Y" et "N". La case K170, qui va être détaillée à l'aide de la figure 8, possède un accès E1 qui succède aux cases K164, K140 et K162, un accès E2 qui succède à la case K159 et qui est situé dans la branche "N" de la case K167 et un accès E3 qui est situé dans la branche "Y" de la case K167.

On examine alors la case K170 détaillée à la figure 8.

De l'accès E1, on va à la case K175 où l'on teste si on a affaire à une lecture ou à une écriture de la variable (W/R). Si on veut écrire la variable dans 16 à 18, on examine l'accessibilité de la mémoire tampon, ou de l'unité d'opérations si elle n'est pas raccordée à une mémoire FIFO (case K176). Si oui on va à la case K177 où l'on effectue le transfert.

Si on veut faire une lecture de la variable d'un organe 16 à 18 (branche "R" du test indiqué à la case K175), on attend que cette mémoire soit disponible, c'est-à-dire, on teste (case K181) la valeur du signal RAD puis on passe à la case K182 où le contenu de la mémoire-paramètre visée est mis dans la mémoire-programme à l'endroit pointé par le compteur-programme en passant par le bus 66.

Les opérations de lecture ou d'écriture étant effectuées, on passe à la case K186 où l'on examine la forme retour : si c'est un retour normal, on passe à la case K188 où le contenu de la mémoire-programme à l'emplacement NOR est mis dans le registre programme 50 (la mémoire est "dépilée" deux fois). Si le test de la case K186 est négatif on va à la case K189 où c'est le contenu, à l'emplacement TOR de la pile de retour 8, qui est mis dans le registre programme, après un dépilage de 1 cran. On exécute alors l'instruction à l'adresse suivante de celle que l'on vient d'exécuter. De ces cases K188 et K189 on va à l'accès S de l'organigramme de la figure 7.

L'accès E2 est relié à la case K186 indiquant ainsi un même test pour les constantes et les variables concernant la forme du retour.

L'accès E3 est pris essentiellement par les instructions d'échanges entre la mémoire-pile 8 et les mémoires 25, 26 et 27. A la case K200, on discrémine les instructions R> et >R (notations du langage Forth). Si on a affaire à l'instruction R>, on va à la case K202 où l'on teste et attend la disponibilité de l'organe d'opération concerné ; cela fait, on teste à la case K205 si l'instruction R> est de type R@ ou pas. Une instruction de type R@ implique simplement un transfert entre la mémoire 8 (position NOR) et la mémoire paramètre de l'unité concernée (case K207), tandis que si elle n'est pas de ce type il faut prévoir un dépilage de la mémoire 8 (case K209).

Le test de la case K200 peut indiquer que l'on a affaire à une instruction >R. On attend la disponibilité de la donnée émanant de l'unité concernée, en testant le signal RAD case K214. La donnée arrivée est mise dans la mémoire 8 comme indiqué à la case K216.

L'organigramme de la figure 8 montre un accès S qui est le point de sortie commun des cases K188, K189, K209 et K216.

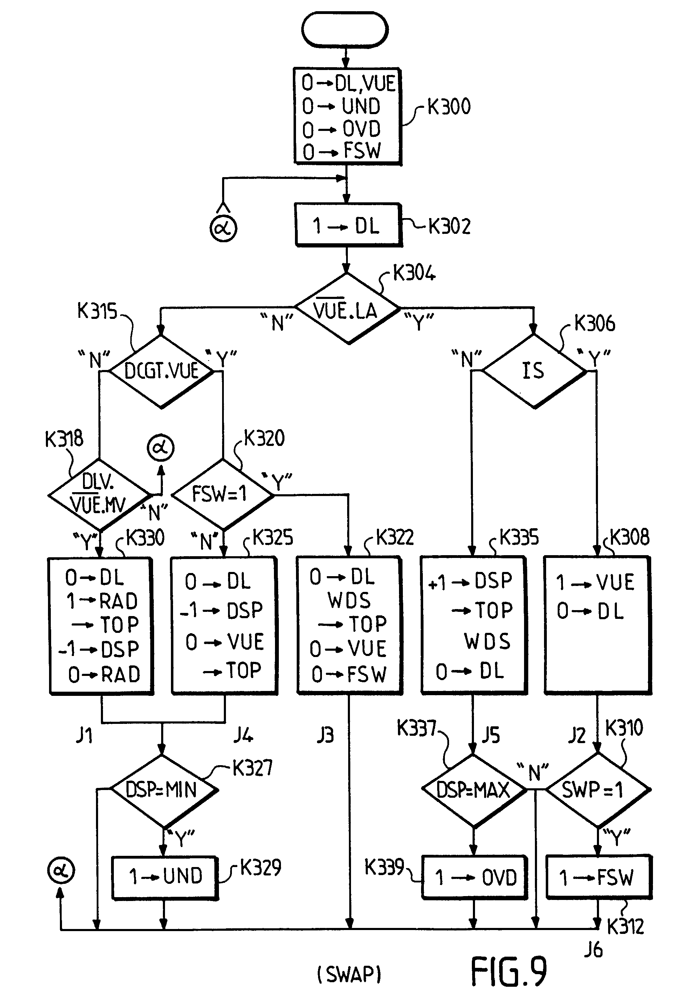

ORGANIGRAMME DE L'ORGANE DE COMMANDE DES ORGANES D'OPERATIONS (figure 9) :

Les opérations effectuées par ces organes sont données en Annexe II avec la référence des cases de l'organigramme qui vont être décrites.

Cet organigramme commence à la case K300 qui montre une séquence d'initialisation où l'on met à zéro les signaux DL, VUE et des drapeaux UND, OVD et FSW. A la case K302 qui suit on met à "1" le signal DL qui indique que l'organe d'opération est disponible. Si le signal LA prend la valeur "1", partant des conditions initiales précitées, le test indiqué à la case K304 est positif. On examine alors, case K306 si l'information qui vient de l'organe du bus 46 est une instruction ou pas (test d'une valeur IS). Si c'est une instruction, elle doit être exécutée et est appliquée pour cela à l'unité 20, figure 4. On examine ensuite si cette instruction est une instruction SWAP (test de SWP à la case K310). Si oui le drapeau FSW est positionné (case K312), si non on va sur la branche "α" qui ramène à la case K302. Du fait que VUE a été mis à "1" le test à la case K304 est négatif. De ce fait on va à la case K315 qui, pour devenir positive, doit attendre que le signal DCGT devienne actif DCGT = 1 indiquant que l'ALU est disponible. S'il ne l'est pas le test indiqué à la case K318 renvoie à la case K302. Lorsque le test de la case K315 devient positif on passe alors à la case K320 qui teste la valeur du drapeau FSW positionné éventuellement à la case K312. Si FSW = 1 (instruction SWAP) différentes mesures sont prises comme indiqué à la case K322, les signaux DL et VUE sont mis à "0", le drapeau FSW est reinitialisé, la donnée à la sortie de l'ALU est mise dans la position TOP de la mémoire de données.

On a ainsi échangé, à travers l'unité 20, les 2 valeurs de la manière suivante : le contenu de TOP est dans le registre 25b ; le contenu du NOP de la mémoire 25 est mis en relation avec l'entrée d'opérande 02 de l'ALU 20. A la sortie de l'ALU 20 le contenu de NOP est transmis par l'intermédiaire du multiplexeur 118 à l'entrée du registre 25b, la commande WDS permet l'enregistrement dans la mémoire 25 de la partie 25a à la position NOP du contenu du registre 26b et la valeur d'entrée du registre 26b est mémorisée dans TOP (contenu de la deuxième partie du registre 26b) de sorte que l'on obtient bien à la fin de ce processus l'échange requis.

Si le test de la case K320 est négatif on va à la case K325 où les valeurs des signaux DL et VUE sont mises à "0", le pointeur de la mémoire de données est décrémenté d'une unité et le résultat à la sortie de l'ALU est mis au sommet de la pile. On a effectué ainsi une opération sur le contenu TOP et NOP et le résultat est écrit dans TOP (registre 26b). On teste ensuite, case K327 si le pointeur de la mémoire a sa valeur minimum ; si oui un drapeau UND est positionné à "1" (case K329). Il est alors possible d'élaborer un signal d'interruption vers le circuit 52 afin d'engendrer une interruption. Si cette position minium n'est pas atteinte on prend la branche "α" qui mène à la case K302.

A la case K318, on détecte s'il y a une communication dans le sens organe d'opérations-organe de décodage (16 vers 35) demandée à travers la ligne 66. Si c'est le cas on a alors DLV = 1. Pour que le test de la case K318 soit positif il faut que DLV.$\overline{\text{VUE}}$.MV = 1. Le signal MV = 1 implique que la mémoire FIFO est vide. Ceci assure le synchronisme des opérations entre l'unité 30 et les différents organes 16, 17 et 18. Les données du registre 26b (TOP) sont mises sur le bus par l'intermédiaire de l'amplificateur 120, puis les valeurs "0" et "1" sont affectées respectivement aux signaux DL et RAD. La donnée NOP est chargée ensuite dans le registre 26b ((TOP), le pointeur DSP est décrémenté d'une unité et le signal RAD est mis à zéro (case K330). On passe alors à la case 327 déjà décrite.

On revient au test indiqué à la case K306. Si l'on n'a pas affaire à une instruction on va à la case K335 où le pointeur de la mémoire de données (DSP) est incrémenté d'une unité, la donnée est emmagasinée à la position TOP de cette mémoire puis on agit sur WDS, cela copie l'ancienne valeur de TOP dans NOP (signal d'écriture sur la pile) et le signal DL est mis à "0". On a ainsi chargé une donnée provenant de l'unité 35 dans la mémoire pile de l'unité d'opération. Le pointeur est ensuite testé, case K337, pour savoir si sa valeur n'a pas atteint le maximum permis. Si le maximum n'est pas atteint on prend la branche "α" pour revenir à la case K302. Si ce maximum est atteint on met à "1" le signal OVD pour signaler qu'un débordement de la mémoire est prêt de se produire. Il est aussi possible d'engendrer une interruption.

FONCTIONNEMENT DE L'ORGANE DE GESTION DES MEMOIRES TAMPONS :

En résumé, il existe trois processus en parallèle pour la FIFO à partir de laquelle sont constitués les organes de mémoire 36 et 37.

-    producteur :
     l'unité centrale 35 veut écrire la FIFO ; elle le fait, si la mémoire n'est pas pleine et incrémente le pointeur d'entrée.
-    consommateur :
     l'organe d'opération 16 ou 17 lit la FIFO ; si elle n'est pas vide, elle incrémente le pointeur de sortie.
-    test : si pointeur de sortie = pointeur d'entrée, la FIFO est vide.
     si le pointeur d'entrée = pointeur de sortie -1, la FIFO est pleine.

L'invention est particulièrement bien adaptée aux calculs de neurones. Le calcul pour une neurone est effectué par un des organes 16, 17 ou 18. Ces calculs impliquent en entrée beaucoup d'opérandes alors qu'en sortie on a peu de résultats. Ces résultats sont véhiculés par la seule ligne 66. L'unité centrale 35 peut alors entreprendre d'autres traitements.

ANNEXE I

| OPERATIONS | REFERENCE SUR ORGANIGRAMME | N° DE LA CASE OU LA SELECTION DE L'OPERATION EST TERMINEE |
|---|---|---|
| >R | I1 | K216 |
| R> | I4 | K209 |

(suite)

| OPERATIONS | REFERENCE SUR ORGANIGRAMME | N° DE LA CASE OU LA SELECTION DE L'OPERATION EST TERMINEE |
|---|---|---|
| R | I7 | K207 |
| FETCH ou STORE IMMEDIAT | I6 | K177, K182 |
| CONSTANTE | I7 | K159 |
| VARIABLE | I8 | K175 |
| RETOUR CONDITION | I10 | K147 |
| RETOUR DE SOUS-PROGRAMME | I11 | K148 |
| APPEL DE SOUS-PROGRAMME | I12 | K115 |
| TRAITEMENT INT. | I13 | K103 |

ANNEXE II

| OPERATIONS | REFERENCE SUR ORGANIGRAMME | CASES OU L'OPERATION EST PRATIQUEMENT TERMINEE |
|---|---|---|
| DECHARGEMENT | J1 | K330 |
| OPERATION 1 TERME* | J2 | K308 |
| SWAP | J3 | K322 |
| OPERATION 2 TERMES** | J4 | K325 |
| CHARGEMENT | J5 | K335 |

\* Opération ALU sans empilage/dépilage (TOP→TOP)

\*\* Opération ALU avec dépilage

ANNEXE III

REPERTOIRE DES SIGLES EMPLOYES

ALU   unité arithmétique et logique des organes d'opération 16, 17, 18

CMI   signal qui est issu de l'unité de décodage 48 positionne le commutateur 90 notamment,

CST   indique que l'instruction définit une constante

DAV   signal fourni par l'unité centrale pour demander l'accès aux mémoires FIFO 36 et 37 ou directement à l'unité 18, i = 1, 2, 3

DBV   signal issu de l'unité de décodage 48 pour une demande de communication avec l'une des mémoires 25, 26 ou 27,

DCGT   disponibilité de l'ALU 20, 21 ou 22

DI   provient du circuit 52 pour déclencher un programme d'interruption

DL   disponibilité de l'organe d'opérations (16, 17 ou 18)

DLV$_i$   signaux provenant de l'unité centrale 35 pour demander la lecture des mémoires 25, 26 et 27

DSP   pointeur des mémoires 25, 26 ou 27

FIFO   mémoire dans laquelle la première donnée entrée est la première donnée sortie

FNO   indique une forme normale d'instruction de retour

FRT   donne le type d'instruction de retour

FSW   drapeau indiquant l'instruction SWAP (échange TOP et NOP)

IN   permet l'introduction de données provenant de l'extérieur (accès 29)

OUT   permet de rendre disponible à l'accès 30 des données provenant de la ligne BUS 66

IR      incrémentation du compteur de lecture de la mémoire 200 (mémoire FIFO)

IS      signal élaboré par l'organe de décodage 110 et faisant partie de l'organe d'opération 16, indique que l'on a affaire à une instruction

IW      incrémentation du compteur d'écriture de la mémoire 200 (mémoire FIFO)

LA      signal indiquant que la mémoire 36 ou 37 peut être lue par l'organe 16 ou 27 ou que l'information peut être prélevée directement sur la ligne 46 (cas de l'organe 18)

MA      mémoire associative constituant l'organe de décodage 48

M       mémoire programme 1

MV      signal indiquant que les mémoires 36 ou 37 sont vides

NOP     avant-dernier élément de la pile formée par les mémoires 25, 26 ou 27

NOR     avant-dernier élément de la pile formée par la mémoire 8

OUT     permet de fournir des données à l'extérieur (accès 30)

OVD     débordement des mémoires 25, 26 ou 27

PC      registre 50

RAD     signal indiquant que des données provenant des organes d'opérations sont disponibles pour l'unité centrale 35

$RAD_i$   signaux provenant de chacun des organes 16, 17, 18 (i = 1, 2, 3) signifiant que les données issues des mémoires 25 à 27 sont disponibles

RAF     indique que l'accès aux organes de mémoire FIFO 26 ou 27 est permis

$RAF_i$   signaux émanant de chacun des organes de mémoire FIFO pour signifier qu'ils sont disponibles

RI      contenu du registre d'interruption (52)

RSP     pointeur de la mémoire de retour (8)

RTST    registre de test 105

SMA     indique si l'instruction concernée est à exécuter par l'unité centrale de décodage 35 ou non

SWP     signal élaboré par l'organe de décodage 110 et faisant partie de l'organe d'opérations 16, indique qu'une donnée est adressée à l'organe 16.

TEST    signal élaboré par le circuit 107

TOP     sommet de la pile constituée par les mémoires 25, 26 ou 27

TOR     sommet de la pile constituée par la mémoire 8

UND     signal indiquant le vidage des mémoires 25, 26 ou 27

VAR     indique que l'instruction définit une variable

VUE     validation de l'ALU 20 par le décodeur d'instruction 112 de l'organe 16

W       écriture ou lecture d'une donnée dans les mémoires 25, 26 ou 27

WDS     signal pour l'écriture dans la mémoire pile des données 25, 26 ou 27

WR      écriture ou lecture de la mémoire 200 (mémoire FIFO)

ZR      mise à zéro du compteur de lecture de la mémoire 200 (mémoire FIFO)

ZW      mise à zéro du compteur d'écriture de la mémoire 200 (mémoire FIFO)

## Revendications

1. Dispositif de traitement d'informations comportant :

   - une mémoire (1) pour contenir des données d'instructions,
   - une unité centrale de décodage (35) reliée à la mémoire programme pour décoder les données d'instructions et pour fournir des codes d'opérations et des codes de destination,

   caractérisé en ce qu'il comporte :

   - une pluralité d'organes d'opérations (16, 17 et 18) reliés en parallèle à l'unité centrale (35) pour exécuter des codes d'opérations,
   - au moins une mémoire de type FIFO (36 et/ou 37) disposée entre au moins un desdits organes d'opérations (16, 17 et 18) et l'unité centrale de décodage (35) pour mettre en file d'attente des codes d'opérations,
   - et des moyens, rattachés à l'unité centrale (35) pour faire fonctionner en parallèle les organes d'opérations (16, 17 et 18) en dirigeant les codes d'opérations vers les organes d'opérations (16, 17 et 18) en fonction des codes de destination,
   - une ligne commune (66) pour relier directement la sortie des organes d'opérations vers l'unité centrale (35) pour exploitation immédiate des résultats.

2. Dispositif de traitement d'informations, selon la revendication 1, caractérisé en ce qu'il comporte au moins une mémoire d'adresse de retour de type pile et au moins une mémoire de données intermédiaires de type pile également.

3. Dispositif de traitement d'informations selon la revendication 1 ou 2, caractérisé en ce qu'il est plus particulièrement adapté pour traiter le langage FORTH.

4. Dispositif de traitement d'informations selon l'une des revendications 1 à 3, caractérisé en ce que l'unité centrale de décodage comporte une unité de décodage formée par une mémoire associative.

5. Dispositif de traitement d'informations selon l'une des revendications 1 à 4, caractérisé en ce que au moins un des organes d'opération comporte une unité arithmétique et logique et une mémoire pile pour les données.

6. Dispositif de traitement d'informations selon la revendication 5, caractérisé en ce qu'il est prévu une ligne BUS pour le transfert des données contenues dans la mémoire pile vers l'unité centrale de décodage.

7. Dispositif selon l'une des revendications 1 à 6, caractérisé en ce que chaque instruction peut être exécutée par un seul organe d'opération à la fois.

8. Dispositif selon l'une des revendications 1 à 6, caractérisé en ce que des instructions peuvent être exécutées par une pluralité d'organes d'opération à la fois.

9. Dispositif selon l'une des revendications 1 à 8, caractérisé en ce que les instructions sont envoyées dans les organes de mémoire après s'être assuré que ceux-ci sont vides.

**Patentansprüche**

1. Datenverarbeitungsanordnung mit

   - einem Speicher (1) zum Einschreiben von Befehlsdaten,
   - einer Decoder-Zentraleinheit (35), die mit dem Programmspeicher zum Decodieren der Befehlsdaten und zum Ausgeben von Operationscoden und Zielcoden gekoppelt ist,

   dadurch gekennzeichnet, daß sie folgende Elemente enthält:

   - eine Vielzahl von Betriebselementen (16, 17 und 18) in Parallelschaltung mit der Zentraleinheit (35) zum Ausführen der Operationscoden,
   - wenigstens einen Speicher vom Typ FIFO (36 und/oder 37) zwischen wenigstens einem der Betriebselemente (16, 17 und 18) und der Decoder-Zentraleinheit (35), um Operationscoden in einer Warteschlange anzuordnen, und
   - Mittel in Verbindung mit der Zentraleinheit (35) zum parallelen Betreiben der Betriebselemente (16, 17 und 18) beim Einführen der Operationscoden in die Betriebselemente (16, 17 und 18) in Abhängigkeit von den Bestimmungscoden,
   - eine gemeinsame Leitung (66) zum direkten Verbinden des Ausgangs der Betriebselemente mit der Zentraleinheit (35) zum sofortigen Ausnutzen der Ergebnisse.

2. Datenverarbeitungsanordnung nach Anspruch 1, dadurch gekennzeichnet, daß sie wenigstens einen Rückkehradreßspeicher vom Stapeltyp und wenigstens einen Zwischen-Datenspeicher ebenfalls vom Stapeltyp enthält.

3. Datenverarbeitungsanordnung nach Anspruch 1 oder 2, dadurch gekennzeichnet, daß sie insbesondere zum Bearbeiten der FORTH-Sprache ausgelegt ist.

4. Datenverarbeitungsanordnung nach einem der Ansprüche 1 bis 3, dadurch gekennzeichnet, daß die Decoder-Zentraleinheit eine aus einem Assoziativspeicher bestehende Decodereinheit ist.

5. Datenverarbeitungsanordnung nach einem der Ansprüche 1 bis 4, dadurch gekennzeichnet, daß sie wenigstens eines der Betriebselemente eine ALU-Einheit und einen Stapelspeicher für die Daten enthält.

6. Datenverarbeitungsanordnung nach Anspruch 5, dadurch gekennzeichnet, daß eine BUS-Leitung für die Übertragung kontinuierlicher Daten vom Stapelspeicher auf die Decoder-Zentraleinheit vorgesehen ist.

7. Datenverarbeitungsanordnung nach einem der Ansprüche 1 bis 6, dadurch gekennzeichnet, daß jeder Befehl von einem einzigen Betriebselement zugleich ausführbar ist.

8. Datenverarbeitungsanordnung nach einem der Ansprüche 1 bis 6, dadurch gekennzeichnet, daß Befehle von einer Mehrzahl von Betriebselementen zugleich durchführbar sind.

9. Datenverarbeitungsanordnung nach einem der Ansprüche 1 bis 8, dadurch gekennzeichnet, daß die Befehle an die Speicherelemente gelangen, nachdem festgestellt wurde, daß sie leer waren.

## Claims

1. An information processing device comprising:

    - a program memory (1) for storing instruction data,
    - a central decoding unit (35) coupled to the program memory to decode the instruction data and to supply operation codes and destination codes

    characterized in that the device comprises:

    - a plurality of operational means (16, 17 and 18) connected in parallel to a central unit (35) to execute operation codes,
    - at least one memory of the FIFO type (36 and/or 37) arranged between at least one of said operational means (16, 17 and 18) and the central decoding unit (35), for operation code queuing,
    - and means coupled to the central unit (35) to make the operation means (16, 17 and 18) operate in parallel by routing the operation codes to the operation means (16, 17 and 18) as a function of the destination codes,
    - a common line (66) for directly linking the output of the operational means to the central unit (35) for immediate processing of the results.

2. An information processing device as claimed in Claim 1, characterized in that it comprises at least one return-address memory of the stack type and at least one intermediate-data memory of the stack type.

3. An information processing device as claimed in Claim 1 or 2, characterized in that it is more particularly adapted to process the FORTH language.

4. An information processing device as claimed in any one of Claims 1 to 3, characterized in that the central decoding unit comprises a decoding unit formed by an associative memory.

5. An information processing device as claimed in any one of Claims 1 to 4, characterized in that at least one of the operational means comprises an arithmetic and logical unit and a stack memory for the data.

6. An information processing device as claimed in Claim 5, characterized in that it comprises a BUS line for transferring the data contained in the stack memory to the central decoding unit.

7. A device as claimed in any one of the Claims 1 to 6, characterized in that each instruction can be executed by a single operational means at a time.

8. A device as claimed in any one of the Claims 1 to 6, characterized in that instructions can be executed by a plurality of operational means at a time.

9. A device as claimed in any one of the Claims 1 to 8, characterized in that the instructions are loaded into the memory means after it has been ascertained that said memory means are empty.

FIG.1

FIG.2

EP 0 520 572 B1

EP 0 520 572 B1

FIG. 3

FIG. 4

FIG. 5

FIG. 6

FIG.7

FIG.8

(SWAP) FIG.9